# DEMANDE DE BREVET EUROPEEN

(11) **EP 0 524 118 A1**
(43) Date de publication de la demande: **20.01.1993**
(21) Numéro de dépôt: 92420238.5
(22) Date de dépôt: 16.07.1992
(51) Int. Cl.: A01D 34/70

(54) **Dispositif permettant d'assurer le prélèvement et le stockage d'herbe**

(30) Priorité: 16.07.1991 FR 9109209
(71) Demandeur: CREATIONS DELERY, F-01600 Trevoux (FR)
(72) Inventeur: Delery, Marc, F-01600 Trévoux (FR)
(74) Mandataire: Laurent, Michel

(57) **Abrégé**

Dispositif permettant d'assurer le prélèvement (coupe et ramassage) ainsi que le stockage d'herbe (ou produits similaires) en vue de leur élimination, et qui se présente sous la forme d'un ensemble constitué par une tête (1) permettant de couper et prélever l'herbe afin de la transférer à l'intérieur d'une enceinte de stockage (4) associée au véhicule (2) permettant de déplacer ledit ensemble.

Il se caractérise en ce que la turbine (12) est dissociée de la tête de coupe et prélèvement proprement dite (11) pour être montée, horizontalement, en dessous de l'enceinte de stockage (4), ladite turbine (12) créant une aspiration à l'intérieur d'un conduit (13) la reliant à la tête de prélèvement (11) proprement dite, conduit qui débouche axialement dans la turbine (12), la matière prélevée étant transférée tangentiellement par la turbine (12) à l'intérieur d'un conduit (15) intégré à la benne de stockage, et qui permet le déversement de l'herbe à l'intérieur de ladite benne.

## Description

La présente invention concerne un perfectionnement apporté aux dispositifs permettant d'assurer le prélèvement sur le sol de produits en vrac, en vue d'assurer leur transfert depuis le site de prélèvement jusqu'à une zone d'évacuation. Elle concerne également les véhicules équipés d'un tel dispositif, et plus particulièrement un nouveau type de tondeuse à gazon.

Dans de nombreux domaines, on se trouve confronté au problème d'avoir à prélever une matière sur un site en vue de la transporter dans une autre zone. Un tel problème se pose notamment lors de l'entretien d'espaces verts (terrains de sport, de golf, pelouses, parcs..) pour ramasser l'herbe après une tonte, éliminer les feuilles ou autres détritus.

Dans la suite de la description, l'invention sera décrite pour une telle application (ramassage de l'herbe après ou lors d'une tonte), mais il est évident que cela n'est pas limitatif et que l'invention pourrait être appliquée dans d'autres domaines où se posent des problèmes similaires, tels que par exemple sur des engins utilisés pour nettoyer les sols, notamment les chaussées, trottoirs.

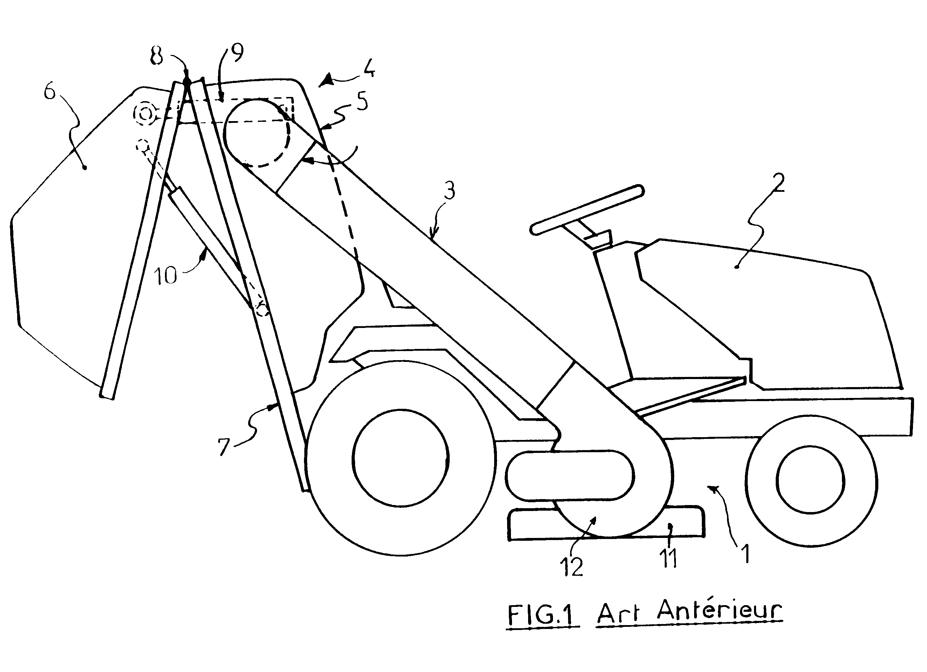

A ce jour, les matériels permettant de réaliser les opérations de tonte, sont constitués d'un véhicule de type "tracteur" sur lequel est monté un ensemble qui permet non seulement d'assure la coupe de l'herbe, mais également son ramassage et son stockage en vue de son élimination. Un tel ensemble dont un mode de réalisation couramment utilisé de nos jours est illustré par la figure 1 annexée, est constitué essentiellement d'une tête, désignée par la référence générale (1), déplaçable à proximité de la surface du sol, fixée en général sous le châssis du véhicule (2) (ou en avant de ce dernier), ces têtes comprenant des moyens permettant de couper et prélever l'herbe qui est transférée au moyen d'un conduit de raccordement (3) à une enceinte de stockage (4) portée par le véhicule, enceinte qui peut se présenter sous différentes formes et être constituée par exemple par un simple sac, une benne fixe ou basculante ou, comme cela est représenté dans la figure 1 annexée, par un ensemble constitué essentiellement de deux coques (5,6) qui définissent entre elles le volume de stockage de la matière. Dans une telle forme de réalisation, les deux coques (5,6) sont montées à l'arrière du véhicule par l'intermédiaire d'un portique (7), l'une (5) étant montée fixe audit portique (7) et l'autre (6) pouvant pivoter sur un axe horizontal (8). Des moyens constitués par exemple par un vérin (9) et un système de type "compas à gaz" (10), permettent de commander les déplacements de la coque (3) par rapport à la coque fixe (2), de telle sorte qu'elles puissent être maintenues en position écartée comme cela est représenté à ladite figure 1 lorsque l'on souhaite procéder à une opération de déchargement de la benne après remplissage et qu'elles soient maintenues plaquées l'une contre l'autre pour définir le volume de stockage lors de l'opération de tonte proprement dite.

Dans de tels ensembles, pour réaliser le transfert de l'herbe coupée par les organes de coupe proprement dits (11), on utilise une turbine (12) qui permet de transférer l'herbe au travers du conduit de raccordement (3) qui débouche dans la partie supérieure de l'enceinte de stockage (4) et, dans le cas présent, à l'intérieur de la coqe fixe (5). La solution la plus répandue, illustrée par la figure 1 annexée, consiste à disposer la turbine (12) soit verticalement comme représenté à la figure 1, soit horizontalement, l'herbe pouvant ou non être soumise à l'action des pales de ladite turbine.

L'un des principaux problèmes qui se posent avec de tels ensembles dans lesquels la turbine est associée directement à la tête de coupe, réside dans leur manque d'efficacité, notamment lorsque l'herbe est mouillée, compte tenu de la grande distance entre ladite turbine et la zone de déversement à l'intérieur de l'enceinte de stockage. Par ailleurs et surtout, une telle conception (organe de coupe et turbine intégrée) conduit à un encombrement important en largeur, puisque la turbine déborde latéralement par rapport à la tête de coupe proprement dite, ainsi qu'à la réalisation d'ensembles de transmission de puissance complexe, surtout lorsque la turbine est disposée verticalement et qui nécessite en général l'utilisation de pignons, renvois d'angle, cardans .. . Enfin, de tels ensembles intégrés (tête de coupe et turbine) sont difficiles à monter et démonter, ce qui complique leur entretien.

Or on a trouvé, et c'est ce qui fait l'objet de la présente invention, un dispositif de conception simple qui permet de résoudre l'ensemble de ces problèmes.

D'une manière générale, l'invention concerne donc un perfectionnement apporté aux dispositifs permettant d'assurer le prélèvement (coupe et ramassage) ainsi que le stockage d'herbe (ou produits similaires) en vue de leur élimination, et qui se présente sous la forme d'un ensemble constitué par une tête déplacable à proximité de la surface du sol et qui permet de couper et prélever l'herbe afin de la transférer au moyen d'un conduit de raccordement à l'intérieur d'une enceinte de stockage associée au véhicule permettant de déplacer ledit ensemble, le perfectionnement selon l'invention se caractérisant en ce que la turbine est dissociée de la tête de coupe et prélèvement proprement dite pour être montée, horizontalement, en dessous de l'enceinte de stockage, ladite turbine créant une aspiration à l'intérieur d'un conduit la reliant à la tête de prélèvement proprement dite, conduit qui débouche axialement dans la turbine, la matière prélevée étant transférée tangentiellement par la turbine à l'intérieur d'un conduit intégré à la benne de stockage, et qui permet le déversement de l'herbe à l'intérieur de ladite benne.

Selon une forme préférentielle de réalisation conforme à l'invention, l'entraînement en rotation de la turbine est réalisé par une courroie de transmission entraînée directement par la poulie motrice commandant la tête de coupe proprement dite.

Par ailleurs, l'enceinte de stockage disposée à l'arrière du véhicule, est de préférence constituée de deux éléments moulés dont la structure et le montage sur le véhicule est tel que :
- le premier élément forme caisson ou bac qui définit le volume de stockage de la matière et présente un fond (ou base) ouvert, cet élément pouvant pivoter sur un axe horizontal situé dans sa partie supérieure ;
- le deuxième élément (volet) étant fixe et supporté à l'arrière du véhicule, présente une face complémentaire du fond ouvert du premier élément permettant de l'obturer lors de l'opération de remplissage, cet élément se présentant sous la forme d'un caisson en dessous duquel est disposée la turbine de transfert et à l'intérieur duquel débouche le conduit de raccordement à la tête de coupe et prélèvement, le conduit de sortie de ladite turbine venant en regard avec un conduit interne prévu à l'intérieur du bac mobile, qui permet de projeter l'herbe dans la partie supérieure de l'enceinte lors de l'opération de tonte.

L'invention et les avantages qui en découlent seront cependant mieux compris grâce à l'exemple de réalisation donné ci-après à titre indicatif, mais non limitatif, et qui est illustré par les schémas annexés dans lesquels :
- la figure 1 illustre, comme dit précédemment, l'art antérieur ;
- la figure 2 est une vue en perspective schématique montrant la structure d'une tondeuse à gazon équipée d'un dispositif de récupération conforme à l'invention, l'enceinte de stockage étant représentée en position fermée ;
- la figure 3 est une vue de détail, en coupe, montrant la manière dont est réalisé le transfert de l'herbe à l'intérieur de l'enceinte de stockage ainsi que la structure de cette dernière, d'une part en traits pleins lors d'une opération de tonte, d'autre part en traits pointillés lors d'une opération de déchargement ;

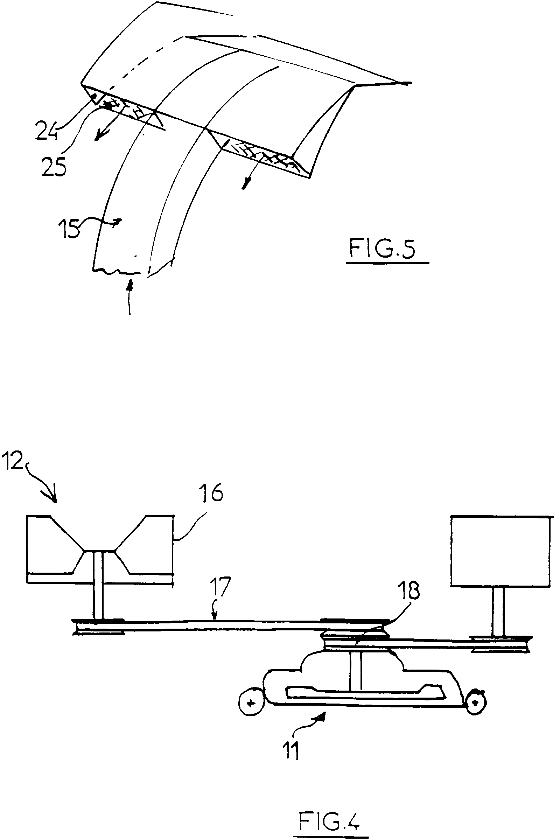

- les figures 4 et 5 sont des vues de détail, la figure 4 montrant la manière dont peut être réalisée la transmission de puissance des différents organes (tête de tonte et turbine) d'un ensemble conforme à l'invention, et la figure 5 la manière dont est réalisé l'échappement de l'air dans une forme de réalisation d'un bac de stockage d'un ensemble conforme à l'invention.

Si l'on se reporte aux schémas annexés, et en utilisant les mêmes références que celles employées pour décrire l'état de la technique illustré par la figure 1, l'invention concerne un perfectionnement apporté aux ensembles permettant d'assurer le prélèvement sur le sol de produits en vrac en vue d'assurer leur transfert depuis le site de prélèvement jusqu'à une zone d'évacuation.

Dans l'exemple d'application illustré, dans le cas des véhicules de type tracteur (2), l'ensemble conforme à l'invention, désigné par la référence générale (1) est monté sur ledit véhicule (2), et est constitué essentiellement par un ensemble de coupe proprement dit (11) et une turbine (12) permettant d'assurer le transfert de l'herbe coupée à l'intérieur d'une enceinte de récupération (4) disposée à l'arrière du véhicule.

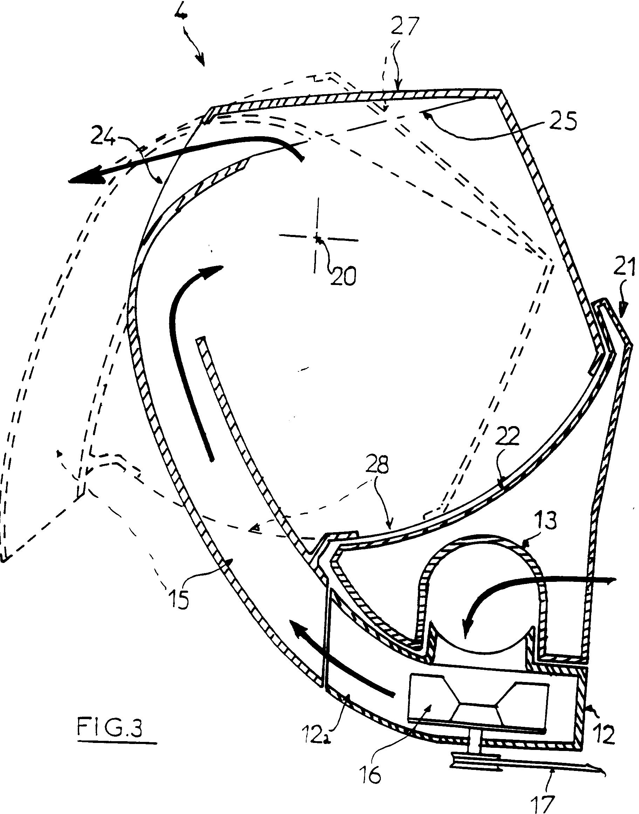

Conformément à l'invention, la turbine de transfert (12) est dissociée de la tête de coupe et de prélèvement (11) et est montée, horizontalement, en dessous de l'enceinte de stockage (4). La turbine (12) est reliée par l'intermédiaire d'un conduit (13) à la sortie (14) de la tête de prélèvement (11), sortie constituée par une goulotte disposée latéralement par rapport au carter de ladite tête de prélèvement (11). La turbine (12) crée l'aspiration à l'intérieur du conduit (13) coopérant donc avec l'action mécanique produite par l'élément de coupe (11) pour assurer le transfert de l'herbe. Le conduit (13) débouche axialement par rapport à la turbine (voir figure 3). La sortie de la turbine est, comme cela ressort également de la figure 3, constituée par un conduit (12a) qui, lorsque la benne de stockage (4) est en position fermée, se trouve positionné en regard d'un conduit de transfert (15) formant partie intégrante avec la coque de ladite benne, et qui permet le déversement de l'herbe à l'intérieur de cette dernière.

Selon le mode de réalisation préférentiel illustré, l'entraînement de la roue (16) de la turbine (12), est réalisé par une courroie de transmission (17) entraînée directement par la poulie motrice (18) commandant la tête de coupe proprement dite. Un tel montage permet d'avoir un ensemble de transmission simplifié, très fiable et facile à entretenir.

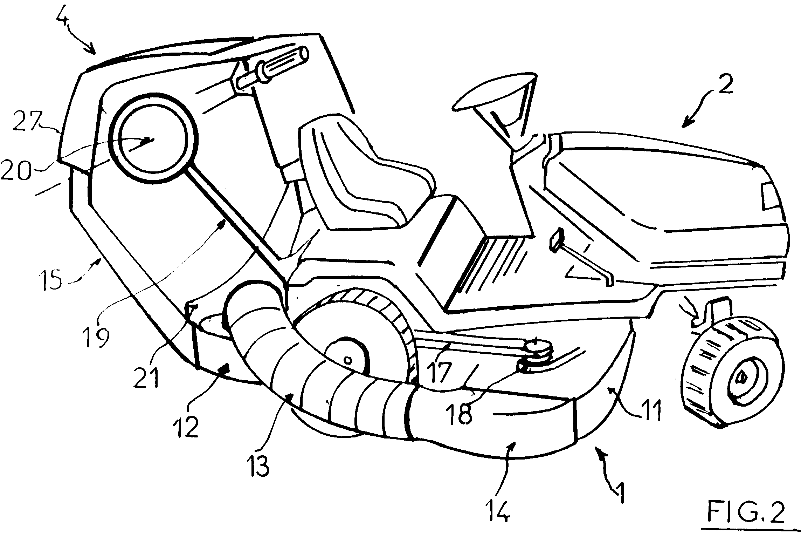

L'enceinte de stockage (4) disposée à l'arrière du véhicule est de préférence constituée par un ensemble moulé. Ledit ensemble se compose essentiellement d'un premier élément (27) en forme de caisson et qui définit le volume de stockage de la matière. Ce caisson (17) présente un fond ou base (28) ouvert, et est monté de la manière illustrée à la figure 2 par l'intermédiaire d'un portique (19) permettant son pivotement autour d'un axe horizontal (20) situé dans sa partie supérieure. Un deuxième élément (21), également moulé, est monté fixe à l'arrière du véhicule et comporte une face pleine (22) ayant une forme et des dimensions complémentaires du fond ouvert (28) permettant de l'obturer lors de l'opération de remplissage (position représentée en traits pleins à la figure 3). Cet élément (21) se présente sous la forme d'un caisson en dessous duquel est disposée la turbine de transfert (12). Le conduit de raccordement (13) débouche à l'intérieur de ce caisson et ce, de manière à ce que l'amenée de l'herbe se fait en position axiale par rapport aux pales (16) de ladite turbine. Grâce à une telle conception, l'herbe coupée est projetée mécaniquement à l'intérieur de la goulotte (14) et du conduit (13) par les organes de coupe proprement dits, son transfert étant facilité par l'aspiration produite par la turbine. Le transfert depuis la turbine (12) jusqu'à l'intérieur de l'enceinte de stockage (4) est provoquée par l'action mécanique des pales (16) qui projettent l'herbe coupée à l'intérieur du conduit de sortie (12a) prévu sur le corps de la turbine dans le conduit de transfert (15) qui forme partie intégrante du bac (4). L'herbe est déversée à l'intérieur du bac (4) par sa partie supérieure. L'air s'échappe de l'enceinte (4) au travers d'ouïes (24) prévues en partie supérieure du bac mobile (17), une grille interne (25) étant par ailleurs prévue pour éviter l'échappement de l'herbe vers l'extérieur.

Un tel ensemble de conception particulièrement simple présente de très nombreux avantages par rapport aux solutions antérieures, parmi lesquels on peut citer :
- une très grande efficacité dans l'opération de transfert de l'herbe depuis la tête de coupe et prélèvement jusqu'à l'enceinte de stockage ;
- une grande fiabilité et un entretien aisé ;
- une meilleure répartition des mâts sur le véhicule et une diminution de l'encombrement.

Bien entendu, l'invention n'est pas limitée à l'exemple de réalisation décrit précédemment, mais elle en couvre toutes les variantes réalisées dans le même esprit.

## Revendications

**1/** Dispositif permettant d'assurer le prélèvement (coupe et ramassage) ainsi que le stockage d'herbe (ou produits similaires) en vue de leur élimination, et qui se présente sous la forme d'un ensemble constitué par une tête (1) permettant de couper et prélever l'herbe afin de la transférer à l'intérieur d'une enceinte de stockage (4) associée au véhicule (2) permettant de déplacer ledit ensemble, caractérisé en ce que la turbine (12) est dissociée de la tête de coupe et prélèvement proprement dite (11) pour être montée, horizontalement, en dessous de l'enceinte de stockage (4), ladite turbine (12) créant une aspiration à l'intérieur d'un conduit (13) la reliant à la tête de prélèvement (11) proprement dite, conduit qui débouche axialement dans la turbine (12), la matière prélevée étant transférée tangentiellement par la turbine (12) à l'intérieur d'un conduit (15) intégré à la benne de stockage, et qui permet le déversement de l'herbe à l'intérieur de ladite benne.

**2/** Dispositif selon la revendication 1, caractérisé en ce que l'entraînement en rotation de la turbine (12) est réalisé par une courroie de transmission (17) entraînée directement par une poulie motrice (18) commandant la tête de coupe proprement dite (11).

**3/** Dispositif selon la revendication 1, caractérisé en ce que l'enceinte de stockage (4) disposée à l'arrière du véhicule (2), est constituée de deux éléments moulés (27,21) dont la structure et le montage sur le véhicule est tel que :
- le premier élément (27) forme caisson ou bac qui définit le volume de stockage de la matière et présente un fond (ou base) ouvert, cet élément pouvant pivoter sur un axe horizontal situé dans sa partie supérieure ;
- le deuxième élément (volet) étant fixe et supporté à l'arrière du véhicule, présente une face complémentaire du fond ouvert du premier élément permettant de l'obturer lors de l'opération de remplissage, cet élément se présentant sous la forme d'un caisson (21) en dessous duquel est disposée la turbine de transfert (12) et à l'intérieur duquel débouche le conduit de raccordement (13) à la tête de coupe et prélèvement (11), le conduit de sortie de ladite turbine (12) venant en regard avec un conduit interne (15) prévu à l'intérieur du bac mobile (17), qui permet de projeter l'herbe dans la partie supérieure de l'enceinte lors de l'opération de tonte.
